# EUROPÄISCHE PATENTANMELDUNG

(11) **EP 0 554 843 A1**
(43) Veröffentlichungstag der Anmeldung: **11.08.1993**
(21) Anmeldenummer: 93101609.1
(22) Anmeldetag: 03.02.1993
(51) Int. Cl.: C08J 3/00, C08L 23/10, C08L 53/00

(54) **Vorrichtung und Verfahren zur Herstellung von Mischungen aus Polyolefinen**

(30) Priorität: 07.02.1992 DE 4203542
(71) Anmelder: BASF Aktiengesellschaft, D-67063 Ludwigshafen (DE)
(72) Erfinder: Schwager, Harald, Dr., W-6720 Speyer (DE); Ruempler, Klaus-Dieter, Dr., W-6706 Wachenheim (DE); Kerth, Juergen, Dr., W-6719 Carlsberg (DE)

(57) **Zusammenfassung**

Vorrichtung zum Herstellen von Mischungen aus einem Propylencopolymerisat a) und einem weiteren Polyolefin b), enthaltend mindestens zwei hintereinander angeordnete Reaktoren und eine mit dem letzten Reaktor verbundene Einrichtung zur Aufnahme und Vermischung des aus dem letzten Reaktor erhaltenen Propylencopolymerisats a) mit dem Polyolefin b).

Mit Hilfe dieser Vorrichtung sowie des ebenfalls erfindungsgemäßen Verfahrens zur Herstellung von Mischungen aus einem Propylencopolymerisat a) und einem weiteren Polyolefin b) kann mindestens eine Einrichtung zur Aufnahme und Vermischung von Formmassen eingespart werden.

## Beschreibung

Die vorliegende Erfindung betrifft eine Vorrichtung zum Herstellen von Mischungen aus einem Propylencopolymerisat a) und einem weiteren Polyolefin b), enthaltend mindestens zwei hintereinander angeordnete Reaktoren und eine mit dem letzten Reaktor verbundene Einrichtung zur Aufnahme und Vermischung des aus dem letzten Reaktor erhaltenen Propylencopolymerisats a) mit dem Polyolefin b).

Außerdem betrifft die vorliegende Erfindung ein Verfahren zur Herstellung von Mischungen aus einem Propylencopolymerisat a) und einem Polyolefin b).

Die Eigenschaften von Polymeren können durch Vermischung von anderen Polymeren verändert werden, wobei Polymermischungen, sogenannte "Blends" entstehen. So lassen sich beispielsweise die Eigenschaften von harten, temperaturbeständigen Polymeren mit denen von weichen, elastischen Polymeren durch Vermischen derart miteinander verbinden, daß die dabei erhältlichen "Blends" eine vorteilhafte Kombination der guten Eigenschaften beider Polymerer darstellen (Saechtling, Kunststoff-Taschenbuch, Carl Hanser-Verlag, München, Seite 8, [1986]).

Durch Vermischung mehrerer Polyolefine ist es beispielsweise möglich, Produkte herzustellen, die zum Teil gegensätzliche Eigenschaften, wie beispielsweise eine hohe Schlagzähigkeit bei gleichzeitig hoher Steifigkeit, aufweisen. So ist beispielsweise aus den Offenlegungsschriften EP-A 462 373 und EP-A 462 448 bekannt, durch Vermischen eines Propylencopolymerisats mit einem Polyethylen in einem Zweischneckenextruder Blends mit einem günstigen Eigenschaftsprofil in bezug auf Schlagzähigkeit, Steifigkeit und Weißbruch herzustellen.

Zur besseren Verarbeitbarkeit von Polymeren ist es notwendig, diese unmittelbar nach ihrer Herstellung weiter aufzubereiten, d.h. zu vermahlen, zerkleinern, homogenisieren oder aber mit geeigneten Zusatzstoffen zu versetzen. Dazu eignen sich u.a. Extruder, Walzwerke, Kneter oder Mischer. Aus verfahrenstechnischen Gründen werden derartige Einrichtungen üblicherweise direkt im Anschluß an die Herstellung des Polymeren eingesetzt, was zur Folge hat, daß sich diese an den Polymerisationsreaktor meist unmittelbar anschließen [D.C. Miles, J.H. Briston "Polymer Technology", Chemical Publishing Co., Inc. New York (1979), Seite 210-218]. Auf diese Weise läßt sich der förder- und regeltechnische Aufwand beim Austrag der Polymeren aus dem Polymerisationsreaktor und bei deren anschließender Aufbereitung begrenzen.

Bei der Herstellung von "Blends" benötigt man eine ganze Reihe solcher Einrichtungen, da sich hinter jedem Polymerisationsreaktor üblicherweise eine derartige Mischungsapparatur anschließt. Darüber hinaus erfordert der eigentliche Mischungsvorgang, in welchem die einzelnen Polymere zu einem "Blend" vereinigt werden, die Mitverwendung einer weiteren Mischungsapparatur. Dies hat zur Folge, daß beispielsweise zur Herstellung eines "Blends" aus zwei verschiedenen Polymeren mindestens drei derartige Mischungsapparaturen verwendet werden müssen, was mit einem nicht unerheblichen apparativen Mehraufwand verbunden ist.

Der vorliegenden Erfindung lag daher die Aufgabe zugrunde, eine apparativ weniger aufwendige Vorrichtung zu entwickeln, mit der Polyolefine leicht vermischt werden können, ohne daß sich dabei die Eigenschaften der dabei erhältlichen Mischungen wesentlich verschlechtern.

Demgemäß wurde eine Vorrichtung zum Herstellen von Mischungen aus einem Propylencopolymerisat a) und einem weiteren Polyolefin b) entwickelt, enthaltend mindestens zwei hintereinander angeordnete Reaktoren und eine mit dem letzten Reaktor verbundene Einrichtung zur Aufnahme und Vermischung des aus dem letzten Reaktor erhaltenen Propylencopolymerisats a) mit dem Polyolefin b).

Als Reaktoren, die bei der Herstellung des Propylencopolymerisats a) verwendet werden, können die in der Technik für die Polymerisation von Olefinen gebräuchlichen Reaktoren eingesetzt werden. Bevorzugte Reaktoren sind dabei insbesondere Autoklaven, die feinteilige Füllstoffe, vorzugsweise feinteiliges Polymerisat enthalten und darüber hinaus mit geeigneten Rührvorrichtungen versehen sind, um den Reaktorinhalt in Bewegung zu halten.

Die erfindungsgemäße Vorrichtung enthält dabei mindestens zwei hintereinandergeschaltete Reaktoren, die durch Fördereinrichtungen so verbunden sind, daß der Inhalt des ersten Reaktors rasch in den zweiten Reaktor überführt werden kann. Üblicherweise erfolgt die überführung des Inhalts des ersten Reaktors in den zweiten Reaktor dadurch, daß man den Druck im ersten Reaktor höher wählt als den Druck im zweiten Reaktor. Auf diese Weise erhält man eine Kaskade von mindestens zwei hintereinandergeschalteten Rührautoklaven. Eine solche Kaskade eignet sich insbesondere für die Gasphasenpolymerisation. Es können aber auch solche hintereinandergeschalteten Reaktoren verwendet werden, die sich für Suspensions- oder Lösungspolymerisationen eignen. Die Reaktorkaskade kann dabei sowohl kontinuierlich, als auch diskontinuierlich oder halbkontinuierlich betrieben werden. Derartige Reaktorkaskaden sind dem Fachmann bekannt, so daß auf eine weitergehende Erläuterung verzichtet werden kann.

Weiterhin enthält die erfindungsgemäße Vorrichtung eine mit dem letzten Reaktor verbundene Einrichtung zur Aufnahme und Vermischung des aus dem letzten Reaktor erhaltenen Propylencopolymerisats a) mit dem Polyolefin b). Unter derartigen Einrichtungen versteht man dabei die in der Kunststoffverarbeitung üblicherweise zur Vermischung von Stoffen eingesetzten Apparaturen, beispielsweise Trommelmischer, Mühlen, Walzwerke, Kneter, sowie Schnecken- und Scheibenextruder. Besonders bevorzugt sind dabei Schneckenextruder, insbesondere Zweischneckenextruder.

Derartige Extruder besitzen mehrere Einzugsöffnungen für das Einspeisen der Mischungsbestandteile, mindestens eine Entgasungsöffnung sowie eine mit einer Granulierdüse versehene Austragsöffnung und sind zur optimalen Verfahrensführung im allgemeinen zonenweise temperierbar. Die Schnecken sind vorzugsweise gleichsinnig drehend und in ihrer Gestaltung den jeweiligen Arbeitsbedingungen in den einzelnen Abschnitten des Extruders angepaßt. Die Wahl der jeweils geeigneten Schnecken bzw. Schneckenelemente, die Schneckendrehzahl sowie die Geometrie des Extruders hängen von den jeweiligen Förderbedingungen und den jeweils eingesetzten Polymeren ab und sind dem Fachmann aufgrund seines Fachwissens geläufig.

Nach der erfindungsgemäßen Vorrichtung ist die zur Herstellung des Propylencopolymerisats a) dienende Reaktorkaskade über den letzten Reaktor mit der bereits beschriebenen Einrichtung verbunden. Zur Überführung des Inhalts des letzten Reaktors in die Einrichtung, in der die eigentliche Vermischung erfolgt, verwendet man die in der Kunststofftechnik üblichen Fördereinrichtungen mit den entsprechenden regelungstechnischen Apparaturen. Die Überführung des Propylencopolymerisats a) in diese Einrichtung kann sowohl absatzweise, als auch kontinuierlich oder halbkontinuierlich erfolgen. Bevorzugt wird dabei die kontinuierliche Überführung. Die dabei verwendeten Fördereinrichtungen können Wärmeaustauscher enthalten. Die Betriebsbedingungen, bei denen die Vermischung des Propylencopolymerisats a) mit dem Polyolefin b) in den dafür vorgesehenen Einrichtungen erfolgt, hängen entscheidend von der Wahl der Vermischungsapparatur, von den chemischen Eigenschaften der eingesetzten Polymerisate sowie von den Überführungsbedingungen ab. In Schneckenextrudern erfolgt beispielsweise der Vermischungsvorgang bei Drücken von 1 bis 100 bar, Temperaturen von 20 bis 300°C und mittleren Verweilzeiten von 0,1 bis 10 Minuten. Bevorzugt sind dabei Drücke von 10 bis 50 bar, Temperaturen von 100 bis 280°c und mittlere Verweilzeiten von 0,5 bis 5 Minuten. Die Schnecken werden üblicherweise bei Drehzahlen von 100 bis 200 Umdrehungen pro Minute betrieben.

Mit Hilfe der erfindungsgemäßen Vorrichtung sowie des erfindungsgemäßen Verfahrens läßt sich die Anzahl der zur Vermischung verwendeten Einrichtungen verringern. Nach einer besonders bevorzugten Ausführungsform benötigt man nur eine der bereits beschriebenen Einrichtungen zur Vermischung, da in diesem Fall das Polyolefin b) nach dessen Herstellung direkt in diejenige Einrichtung übergeführt wird, die mit dem letzten Reaktor der zur Herstellung des Propylencopolymerisats a) verwendeten Reaktorkaskade verbunden ist. Dadurch lassen sich zwei Vermischungseinrichtungen einsparen. Nach einer weiteren, ebenfalls bevorzugten Ausführungsform wird das Polyolefin b) nach dessen Herstellung aber noch vor dessen Einspeisung in die Einrichtung zur Aufnahme und zur Vermischung des Propylencopolymerisats a) mit dem Polyolefin b) in eine weitere Einrichtung zur Aufnahme und Vermischung von Formmassen übergeführt. Als weitere Einrichtungen werden in diesem Fall die gleichen Vermischungsapparaturen beschrieben, wie sie für die Vermischung des Propylencopolymerisats a) mit dem Polyethylen b) verwendet werden. Vorzugsweise sind dies Schneckenextruder, insbesondere Zweischneckenextruder. Auf diese Weise läßt sich eine Vermischungseinrichtung einsparen.

Als Propylencopolymerisat a) verwendet man entsprechend dem ebenfalls erfindungsgemäßen Verfahren ein solches Polymerisat, welches aus 20 bis 98 Gew.-%, vorzugsweise aus 60 bis 98 Gew.-% eines Propylenpolymerisats mit 0 bis 2 Gew.-% einpolymerisierter C₂-C₁₀-Alk-1-ene und aus 2 bis 80 Gew.-%, insbesondere 2 bis 40 Gew.-% eines statistischen Propylencopolymerisats mit 10 bis 90 Gew.-% einpolymerisierter C₂-C₁₀-Alk-1-ene besteht. Besonders bevorzugt ist dabei ein solches Propylencopolymerisat a), welches 65 bis 97 Gew.-% eines Propylenpolymerisats mit 0 bis 1 Gew.-% einpolymerisierter C₂-C₁₀-Alk-1-ene und 3 bis 35 Gew.-% eines statistischen Propylencopolymerisats mit 20 bis 80 Gew.-% einpolymerisierter C₂-C₁₀-Alk-1-ene enthält. Unter einpolymerisierten C₂-C₁₀-Alk-1-enen versteht man dabei insbesondere Ethylen, But-1-en, Pent-1-en, Hex-1-en, Hept-1-en oder Oct-1-en, sowie Gemische dieser Monomeren, wobei bevorzugt Ethylen oder But-1-en verwendet werden. Der Anteil an Comonomeren im Propylencopolyinerisat a) sollte dabei so bemessen werden, daß dieser 30 Gew.-%, vorzugsweise 25 Gew.-% nicht übersteigt.

Die Herstellung dieser Propylencopolymerisate a) erfolgt durch Polymerisation mit Hilfe von Ziegler-Natta-Katalysatoren unter Verwendung der bereits beschriebenen Reaktorkaskade. Die dabei eingesetzten Ziegler-Natta-Katalysatoren bestehen üblicherweise aus einer Feststoffkomponente, die neben Titan, Magnesium und einem Halogen noch einen Elektronendonor aufweist, einer Aluminiumkomponente und einer weiteren Elektronendonorkomponente.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂·ₐA₂O₃, wobei a für einen Wert von 0,001 bis 2, insbesondere von 0,01 bis 0,5 steht, gut bewährt haben.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesium-di-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 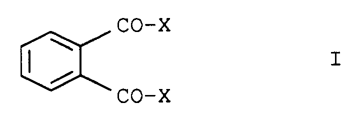
verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der USA-A 4 857 613 beschrieben.

Die titanhaltige Feststoffkomponente wird zusammen mit Cokatalysatoren als Ziegler-Natta-Katalysatorsystem verwendet. Als Cokatalysatoren kommen dabei Aluminiumverbindungen und weitere Elektronendonorverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen Wie beispielsweise Dimethoxydiisopropylsilan, Dimethoxyisobutylisopropylsilan, Dimethoxydiisobutylsilan, Dimethoxydicyclopentylsilan und Diethoxyisobutylisopropylsilan.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in die Reaktorkaskade eingebracht werden.

Die aus der Reaktorkaskade erhältlichen Propylencopolymerisate a) werden dort durch ein zweistufiges Polymerisationsverfahren hergestellt, wobei in einer ersten Polymerisationsstufe Propylen, gegebenenfalls zusammen mit untergeordneten Anteilen eines oder mehrerer C₂-C₁₀-Alk-1-ene, polymerisiert wird und diesem Polymerisat anschließend in einer zweiten Polymerisationsstufe ein Gemisch aus Propylen und einem oder mehreren C₂-C₁₀-Alk-1-enen hinzupolymerisiert wird. Jede Polymerisationsstufe entspricht dabei mindestens einem Reaktor in der Kaskade. Nach einem bevorzugten Herstellungsverfahren verwendet man dabei eine Kaskade aus zwei verschiedenen Reaktoren, was zur Folge hat, daß in jeder Polymerisationsstufe genau ein Reaktor verwendet wird.

Die Polymerisation wird in der ersten Polymerisationsstufe üblicherweise bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind dabei Drücke von 20 bis 35 bar, Temperaturen von 65 bis 85°C und mittlere Verweilzeiten von 1,5 bis 4 Stunden. Für den Fall, daß die Polymerisation des Propylens in Anwesenheit von weiteren C₂-C₁₀-Alk-1-enen durchgeführt wird, ist dafür Sorge zu tragen, daß das Verhältnis der Partialdrücke zwischen Propylen und dem des C₂-C₁₀-Alk-1-ens oder des entsprechenden Gemisches im Bereich von 10:1 bis 500:1 liegt.

Das in der ersten Polymerisationsstufe gebildete Propylenpolymerisat wird nach Beendigung der Reaktion mit dem Katalysator aus dieser ausgetragen und in die zweite Polymerisationsstufe eingeführt, wo diesem ein Gemisch aus Propylen und einem oder mehreren C₂-C₁₀-Alk-1-enen, insbesondere Ethylen oder But-1-en hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt üblicherweise bei 30 bis 100, bevorzugt bei 35 bis 80°C und die mittlere Verweilzeit des Polymerisats beträgt 1 bis 5 Stunden, bevorzugt 1,5 bis 4 Stunden.

In der zweiten Polymerisationsstufe liegt das Verhältnis der Partialdrücke zwischen Propylen und dem oder den C₂-C₁₀-Alk-1-enen üblicherweise im Bereich von 0,5:1 bis 5:1, insbesondere im Bereich von 1:1 bis 4:1. Bevorzugt wird dabei das Gewichtsverhältnis zwischen den in der ersten und den in der zweiten Polymerisationsstufe umgesetzten Monomeren so bemessen, daß es in einem Bereich von 0,5:1 bis 20:1, insbesondere im Bereich von 1:1 bis 15:1, liegt.

Die auf diese Weise erhältlichen Propylencopolymerisate a) weisen einen Schmelzflußindex von 0,1 bis 100 g/10 min, insbesondere von 0,5 bis 50 g/10 min, bei 230°C und unter einem Gewicht von 2,16 kg auf. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird.

Weiterhin verwendet man nach dem erfindungsgemäßen Verfahren ein Polyolefin b) zum Vermischen mit dem Propylencopolymerisat a). Vorzugsweise wird dabei ein Ethylenpolymerisat, ein Propylenhomopolymerisat, ein statistisches Propylen-Ethylencopolymerisat, ein Isobutenpolymerisat oder Mischungen aus diesen Polyolefinen verwendet. Die Herstellung derartiger Polyolefine b) ist dem in der Kunststofftechnik kundigen Fachmann geläufig.

Als besonders bevorzugtes Polyolefin b) wird ein Ethylenpolymerisat mit einer Dichte von 0,94 bis 0,98 g/cm², insbesondere von 0,945 bis 0,970 verwendet. Die Herstellung derartiger Ethylenpolymerisate erfolgt üblicherweise durch Niederdruckpolymerisation mit metallhaltigen Katalysatoren, beispielsweise mit Hilfe von titanhaltigen Ziegler-Katalysatoren oder durch Phillips-Katalysatoren auf der Basis von chromhaltigen Verbindungen. Als Reaktoren finden dabei die in der Polymerisationstechnik gebräuchlichen Polymerisationsreaktoren Verwendung, insbesondere mit Rührvorrichtungen ausgestattete Autoklaven oder Schleifenreaktoren. Die Herstellung dieser speziellen Ethylenpolymerisate b) kann sowohl in der Gasphase, in Lösung oder auch in einer Aufschlämmung durchgeführt werden. Das dabei erhältliche Ethylenpolymerisat kann direkt in die, in der erfindungsgemäßen Vorrichtung enthaltende Einrichtung zur Vermischung eingespeist werden. Darüber hinaus besteht noch die Möglichkeit, das Ethylenpolymerisat nach dessen Herstellung aber noch vor dessen Einspeisung in die Einrichtung zur Vermischung in eine weitere Einrichtung zur Aufnahme und Vermischung von Formmassen überzuführen. Der Schmelzflußindex des dazu verwendeten Ethylenpolymerisats liegt unterhalb von 15 g/10 min, insbesondere unterhalb von 10 g/10 min, gemessen bei einer Temperatur von 190°C und unter einem Gewicht von 21,6 kg, nach DIN 53 735.

Das Propylencopolymerisat a) und das Polyolefin b) können in beliebigen Mengenverhältnissen innerhalb der erfindungsgemäßen Vorrichtung vermischt werden. Bevorzugt werden diese Polymerisate jedoch in solchen Mengen eingesetzt, daß das in den hintereinander geschalteten Reaktoren innerhalb der erfindungsgemäßen Vorrichtung hergestellte Propylencopolymeri-sat a) einen Anteil von 20 bis 99 Gew.-%, vorzugsweise von 70 bis 97 Gew.-% an der Gesamtmischung aufweist, das Polyolefin b) entsprechend dann 1 bis 80 Gew.-%, vorzugsweise 3 bis 30 Gew.-%.

Nach einer weiteren Ausführungsmethode des ebenfalls erfindungsgemäßen Verfahrens kann die Vermischung des Propylencopolymerisats a) mit dem Polyolefin b) auch in Gegenwart radikalisch zerfallender Initiatoren erfolgen. In Betracht kommen dabei insbesondere Peroxide, Hydroperoxide oder azogruppenhaltige Verbindungen, sowie Gemische dieser Substanzklassen. Als Beispiele seien genannt: tert.-Butylmaleinat, 2,5-Dimethyl-2,5-di(tert.butylperoxy)hexan, tert.-Butylperpivalat, Di-tert.-butylperoxid, tert.-Butylhydroperoxid, tert.-Butylperbenzoat, Dilauroylperoxid, tert.-Butylperisononanoat, tert.-Butylcumylperoxid, Peroxybenzoesäure, Di-2-ethylhexylperoxydicarbonat, Methylisobutylketonperoxid und Azoisobuttersäurenitril. Derartige radikalische Initiatoren werden vorzugsweise zu Beginn der Vermischung des Propylencopolymerisats a) mit dem Polyolefin b) in die dafür vorgesehene Einrichtung eindosiert. Üblicherweise werden die radikalisch zerfallenden Initiatoren in Konzentrationen von 100 bis 4000 ppm, bezogen auf das Gesamtpolymerisat, in Form einer Lösung in einem inerten Lösungsmittel eingesetzt. Die eigentliche Vermischung erfolgt unter den gleichen, bereits beschriebenen Bedingungen. Durch Mitverwendung derartiger radikalisch zerfallender Initiatoren gelingt es, die Fließfähigkeit der entstehenden Polymermischungen zu verbessern.

Mit Hilfe der erfindungsgemäßen Vorrichtung läßt sich die Vermischung des Propylencopolymerisats a) mit dem Polyolefin b) verfahrenstechnisch leicht durchführen. Darüber hinaus ist es möglich, wenigstens eine, teilweise auch mehrere Einrichtungen zur Aufnahme und Vermischung der beschriebenen Polymerisate einzusparen, da die Vermischung direkt in der mit dem letzten Reaktor der Kaskade verbundenen Einrichtung erfolgt und das Polyolefin b) gegebenenfalls auch ohne Vorbehandlung in diese eingeführt werden kann.

Aufgrund der Einsparung derartiger Einrichtungen läßt sich die Vermischung, verglichen mit den bisher bekannten Verfahren, unter geringerem apparativen und regeltechnischen Aufwand durchführen. Die dabei erhältlichen Polymermischungen weisen vergleichbar gute Eigenschaften auf wie die nach herkömmlichen Verfahren hergestellten Mischungen.

Die erfindungsgemäße Vorrichtung eignet sich insbesondere zur Herstellung von Polyolefinmischungen, die als Formteile, Rohre, Folien, Beläge, Fasern und Hohlkörper Verwendung finden.

### Beispiele

In den Beispielen 1-4 wurde eine Vorrichtung verwendet, die
- aus einer Kaskade von zwei verschiedenen, gerührten Autoklaven, die beide das gleiche Nutzvolumen von 200 l aufwiesen und jeweils mit einem bewegten Festbett aus feinteiligem Polypropylen gefüllt waren,
- sowie einem Zweischneckenextruder "ZSK 40" der Firma Werner & Pfleiderer mit einem Längen/Durchmesserverhältnis von 30 bestand. Der Zweischneckenextruder wies am Ende eine Granulierdüse auf, durch die die Polymermischung wieder ausgetragen werden konnte. Der Extruder wurde bei einer Schneckendrehzahl von 100 bis 200 Umdrehungen betrieben.

In allen Beispielen wurde das in der Autoklavenkaskade hergestellte Propylencopolymerisat a) mit dem Polyolefin b) im Zweischneckenextruder vermischt und anschließend über die Granulierdüse als Strang ausgetragen und abgeschlagen. Die Vermischung erfolgte dabei bei einem durchschnittlichen Druck von 30 bar, einer Temperatur von etwa 220°C, einer Schneckendrehzahl von etwa 150 Umdrehungen pro Minute und einer mittleren Verweilzeit der Polymerisate von bis zu 1 Minute.

### Beispiel 1

Aus dem letzten Autoklaven der Kaskade wurde ein Propylencopolymerisat a) ausgetragen, welches aus 82 Gew.-% Propylenhomopolymerisat und 18 Gew.-% Propylen-Ethylencopolymerisat bestand, einen Ethylengehalt von 9 Gew.-%, bezogen auf das Gesamtpolymerisat, und einen Schmelzflußindex von 3,0 g/10 min [bei 230°C und 2,16 kg, nach DIN 53 735] aufwies. 85 Gew.-Teile dieses Propylencopolymerisats wurden zusammen mit 15 Gew.-Teilen eines Ethylenpolymerisats mit einer Dichte von 0,952 bis 0,956 g/cm³ und einem Schmelzflußindex von 2,0 g/10 min [bei 190°C und 21,6 kg, nach DIN 53 735] im Zweischneckenextruder unter den angegebenen Bedingungen vermischt.

Das dabei verwendete Ethylenpolymerisat wurde nach seiner Herstellung und vor seiner Vermischung mit dem Propylencopolymerisat a) im Zweischneckenextruder keiner Aufbereitung in einer Mischungseinrichtung unterworfen.

Die Eigenschaften der dabei erhaltenen Polymermischung sind in der nachfolgenden Tabelle aufgeführt.

### Beispiel 2

Analog dem Beispiel 1 wurde aus dem letzten Autoklaven ein Propylencopolymerisat a) ausgetragen, welches aus 70 Gew.-% Propylenhomopolymerisat und 30 Gew.-% Propylen-Ethylencopolymerisat bestand, einen Ethylengehalt von 16 Gew.-%, bezogen auf das Gesamtpolymerisat, und einen Schmelzflußindex von 2,4 g/10 min [bei 230°C und 2,16 kg, nach DIN 53 735] aufwies. 82 Gew.-Teile dieses Propylencopolymerisats wurden zusammen mit 18 Gew.-Teilen eines Ethylenpolymerisats mit einer Dichte von 0,948 bis 0,952 g/cm³ und einem Schmelzflußindex von 0,2 g/10 min [bei 190°C und 2,16 kg, nach DIN 53 735] im Zweischneckenextruder unter den angegebenen Bedingungen vermischt.

Das dabei verwendete Ethylenpolymerisat wurde nach seiner Herstellung und vor seiner Vermischung mit dem Propylencopolymerisat einer Aufbereitung in einem weiteren Zweischneckenextruder "ZSK 40" der Firma Werner & Pfleiderer unterworfen. Dabei wurde das Ethylenpolymerisat unter einem Druck von 30 bar, einer Temperatur von 220°C, einer Schneckendrehzahl von 150 Umdrehungen pro Minute und einer mittleren Verweilzeit von 1 Minute homogenisiert und daran anschließend zur Vermischung mit dem Propylencopolymerisat a) in den mit der Kaskade verbundenen Zweischneckenextruder übergeführt.

Die Eigenschaften der dabei erhaltenen Polymermischung sind in der nachfolgenden Tabelle aufgeführt.

### Beispiel 3

Analog den Beispielen 1 und 2 wurde aus dem letzten Autoklaven ein Propylencopolymerisat a) ausgetragen, welches aus 81 Gew.-% eines Propylenpolymerisats mit 0,9 Gew.-% einpolymerisiertem But-1-en und aus 19 Gew.-% eines Propylen-Ethylen-But-1-encopolymerisats mit einem Ethylengehalt von 10 Gew.-% und einem But-1-engehalt von 1,0 Gew.-%, jeweils bezogen auf das Gesamtpolymerisat, bestand. Der Schmelzflußindex dieses Propylencopolymerisats a) lag bei 2,4 g/10 min [bei 230°C und 2,16 kg, nach DIN 53 735]. 85 Gew.-Teile dieses Propylencopolymerisats wurden anschließend zusammen mit 15 Gew.-Teilen eines Ethylenpolymerisats mit einer Dichte von 0,952 bis 0,956 g/cm³ und einem Schmelzflußindex von 2,0 g/10 min [bei 190°C und 21,6 kg, nach DIN 53 735] im Zweischneckenextruder unter den angegebenen Bedingungen vermischt.

Das dabei verwendete Ethylenpolymerisat wurde nach seiner Herstellung und vor seiner Vermischung mit dem Propylencopolymerisat a) im Zweischneckenextruder keiner Aufbereitung in einer Mischungseinrichtung unterworfen.

Die Eigenschaften der dabei erhaltenen Polymermischung sind in der nachfolgenden Tabelle aufgeführt.

### Beispiel 4

Analog den Beispielen 1 bis 3 wurde aus dem letzten Autoklaven der Kaskade ein Propylencopolymerisat a) ausgetragen, welches aus 82 Gew.-% Propylenhomopolymerisat und 18 Gew.-% eines Propylen-Ethylencopolymerisats bestand, einen Ethylengehalt von 9 Gew.-%, bezogen auf das Gesamtpolymerisat, und einen Schmelzflußindex von 3,0 g/10 min [bei 230°C und 2,16 kg, nach DIN 53 735] aufwies. 85 Gew.-Teile dieses Propylencopolymerisats wurden zusammen mit 15 Gew.-Teilen eines Ethylenpolymerisats mit einer Dichte von 0,952 bis 0,956 g/cm³ und einem Schmelzflußindex von 2,0 g/10 min [bei 230°C und 21,6 kg, nach DIN 53 735] und 700 ppm, bezogen auf das Gesamtpolymerisat, 2,5-Dimethyl-2,5-di(tert.-butylperoxy)hexan im Zweischneckenextruder unter den angegebenen Bedingungen vermischt. Das Peroxid wurde in Form einer 50 gewichtsprozentigen Lösung in n-Heptan hinzugefügt.

Das dabei verwendete Ethylenpolymerisat wurde nach seiner Herstellung und vor seiner Vermischung mit dem Propylencopolymerisat a) und dem Peroxid im Zweischneckenextruder keiner Aufbereitung in einer Mischungseinrichtung unterworfen.

Die Eigenschaften der dabei erhaltenen Polymermischung sind in der nachfolgenden Tabelle aufgeführt.

**Tabelle**

| Eigenschaften der erhaltenen Polymermischung | | | | |
|---|---|---|---|---|
| | Beispiele | | | |
| | 1 | 2 | 3 | 4 |
| Steifigkeit (G-Modul)^{a)} ^{[N/mm}2^{]} | 530 | 310 | 480 | 500 |
| Schlagzähigkeit^{b)} ^{[kJ/m}2^{]} | ohne Bruch | ohne Bruch | ohne Bruch | ohne Bruch |
| Kerbschlagzähigkeit^{c)} [kJ/m²] | 7,8 | 9,4 | 8,8 | 8,8 |
| Weißbruch^{d)} [mm] | 15,6 | 10,0 | 11,2 | 15,8 |
| Schmelzflußindex^{e)} | 1,7 | 1,7 | 1,3 | 5,0 |

| | | | | |
|---|---|---|---|---|
| a) nach DIN 53 445 | | | | |
| b) nach DIN 53 453, bei -20°C | | | | |
| c) nach DIN 53 453, bei -20°C | | | | |
| d) bei 23°C, Beschreibung nächste Seite | | | | |
| e) bei 230°C und 2,16 kg, nach DIN 53 735 | | | | |

### Bestimmung des Weißbruchs:

Der Weißbruch wurde mit Hilfe einer Fallbolzenapparatur nach DIN 53 443 Teil 1 ermittelt, wobei ein Fallbolzen mit einer Masse von 250 g, einem Stoßkörper mit 5 mm Durchmesser und einem Kalottenradius von 25 mm verwendet wurde. Die Fallhöhe betrug 50 cm.

Als Probekörper wurde eine spritzgegossene Rundscheibe mit einem Durchmesser von 60 mm und einer Dicke von 2 mm verwendet. Der Probekörper wurde bei einer Massetemperatur von 250°C und einer Werkzeugoberflächentemperatur von 30°C spritzgegossen.

Die Prüfung erfolgte bei einer Temperatur von 23°C, wobei jeder Probekörper nur jeweils einem Stoßversuch unterworfen wurde. Dabei wurde zunächst der Probekörper auf einen Auflagering gelegt, ohne daß dieser eingespannt wurde, und anschließend wurde der Fallbolzen ausgelöst. Zur Mittelwertbildung wurden jeweils 5 Probekörper geprüft.

Der Durchmesser der sichtbaren Weißbruchmarkierung ist in mm angegeben und wurde dadurch ermittelt, daß man diesen auf der dem Stoß abgewandten Seite der Rundscheibe in Fließrichtung und senkrecht dazu maß und aus beiden Werten den Mittelwert bestimmte.

Aus den Beispielen 1 bis 4 wird deutlich, daß die mit Hilfe der erfindungsgemäßen Vorrichtung hergestellten Polymermischungen gute Eigenschaften hinsichtlich ihrer mechanischen Stabilität, ihres Weißbruchs und ihrer Fließfähigkeit (Schmelzflußindex) aufweisen, obwohl auf die Mitverwendung von einem (Beispiel 2), bzw. von zwei Zweischneckenextrudern (Beispiele 1, 3 und 4) verzichtet worden ist. Auf diese Weise läßt sich Extruderkapazität einsparen und der Energieverbrauch bei der Herstellung derartiger Polymermischungen senken.

## Patentansprüche

1. Vorrichtung zum Herstellen von Mischungen aus einem Propylencopolymerisat a) und einem weiteren Polyolefin b), enthaltend mindestens zwei hintereinander angeordnete Reaktoren und eine mit dem letzten Reaktor verbundene Einrichtung zur Aufnahme und Vermischung des aus dem letzten Reaktor erhaltenen Propylencopolymerisats a) mit dem Polyolefin b).

2. Vorrichtung nach Anspruch 1, die als Einrichtung zur Aufnahme und Vermischung des aus dem letzten Reaktor erhaltenen Propylencopolymerisats a) mit dem Polyolefin b) einen Schneckenextruder aufweist.

3. Vorrichtung nach den Ansprüchen 1 oder 2, die als Einrichtung zur Aufnahme und Vermischung des aus dem letzten Reaktor erhaltenen Propylencopolymerisats a) mit dem Polyolefin b) einen Zweischneckenextruder aufweist.

4. Verfahren zur Herstellung von Mischungen aus einem Propylencopolymerisat a) und einem Polyolefin b), wobei man das in zwei hintereinander angeordneten Reaktoren hergestellte Propylencopolymerisat a) anschließend in eine Einrichtung zur Aufnahme und zur Vermischung des Propylencopolymerisats a) mit dem Polyolefin b) überführt.

5. Verfahren nach Anspruch 4, dadurch gekennzeichnet, daß man das Polyolefin b) nach dessen Herstellung aber noch vor dessen Einspeisung in die Einrichtung zur Aufnahme und zur Vermischung des Propylencopolymerisats a) mit dem Polyolefin b) in eine weitere Einrichtung zur Aufnahme und Vermischung von Formmassen überführt.

6. Verfahren nach den Ansprüchen 4 oder 5, dadurch gekennzeichnet, daß man ein Propylencopolymerisat a) verwendet, daß aus 20 bis 98 Gew.-% eines Propylenpolymerisats mit 0 bis 2 Gew.-% einpolymerisierter C₂-C₁₀-Alk-1-ene und 2 bis 80 Gew.-% eines statistischen Propylencopolymerisats mit 10 bis 90 Gew.-% einpolymerisierter C₂-C₁₀-Alk-1-ene besteht.

7. Verfahren nach den Ansprüchen 4 bis 6, dadurch gekennzeichnet, daß man als Polyolefin b) ein Ethylenpolymerisat, ein Propylenhomopolymerisat, ein statistisches Propylen-Ethylencopolymerisat, ein Isobutenpolymerisat oder Mischungen aus diesen Polyolefinen verwendet.

8. Verfahren nach den Ansprüchen 4 bis 7, dadurch gekennzeichnet, daß man als Polyolefin b) ein Ethylenpolymerisat mit einer Dichte von 0,94 bis 0,98 g/cm³ verwendet.

9. Verfahren nach den Ansprüchen 4 bis 8, dadurch gekennzeichnet, daß man die Vermischung des Propylencopolymerisats a) mit dem Polyolefin b) in der dafür vorgesehenen Einrichtung in Anwesenheit radikalisch zerfallender Initiatoren durchführt.
